# EUROPÄISCHE PATENTSCHRIFT

(11) **EP 3 935 320 B1**
(45) Veröffentlichungstag und Bekanntmachung des Hinweises auf die Patenterteilung: **14.05.2025**
(21) Anmeldenummer: 20710071.0
(22) Anmeldetag: 27.02.2020
(51) Int. Cl.: F24H 1/10, F24H 9/20, G01F 1/06, G01F 1/10, G01F 15/00

(54) **LAGERKOMPONENTE FÜR DURCHFLUSSSENSOR, DURCHFLUSSBAUGRUPPE UND HAUSTECHNIKGERÄT**
BEARING COMPONENT FOR FLOW SENSOR, FLOW ASSEMBLY AND HOUSEHOLD APPLIANCE
COMPOSANTE PALIER POUR CAPTEUR DE DÉBIT, ENSEMBLE DE FLUX ET APPAREIL DOMESTIQUE

(30) Priorität: 07.03.2019 DE 102019001529
(43) Veröffentlichungstag der Anmeldung: 12.01.2022
(73) Patentinhaber: Stiebel Eltron GmbH & Co. KG, 37603 Holzminden (DE)
(72) Erfinder: GROBE, Michael, 37671 Höxter (DE); KLIE, Steffen, 37639 Lobach (DE)
(86) Internationale Anmeldenummer: PCT/EP2020/055169
(87) Internationale Veröffentlichungsnummer: WO 2020/178141

(56) Entgegenhaltungen:
- EP-A1- 2 017 585
- DE-A1- 102012 013 347
- DE-C1- 10 225 722
- DE-U1- 29 617 294

## Beschreibung

Die vorliegende Erfindung betrifft eine Lagerung für einen Durchflusssensor eines Haustechnikgeräts, eine Durchflussmesseinheit eines Haustechnikgeräts und ein Haustechnikgerät.

Bei Haustechnikgeräten oder Haushaltsgeräten, beispielsweise Durchlauferhitzern, mit einer Flüssigkeitszuführung ist es erforderlich, die Durchflussmenge der Flüssigkeit durch das Haushaltsgerät oder das Haustechnikgerät feststellen zu können. Dies erfolgt typischerweise über einen Durchflusssensor.

DE 10 2008 043 613 A1 zeigt ein Haushaltsgerät mit einer Flüssigkeitszuführung. Zur Erfassung der Durchflussmenge durch das Haushaltsgerät wird ein Durchflusssensor vorgesehen. Der Durchflusssensor weist ein Flügelrad auf, welches in einem Gehäuse vorgesehen ist. Das Gehäuse ist mit einem flüssigkeitsführenden Kanal gekoppelt. Das Gehäuse besteht aus einem Grundkörper und einem Deckel.

DE 200 05 327 U1 zeigt einen Durchlauferhitzer mit einem Flügelrad-Durchflussmesser. Ein Flügelrad ist in einem Gehäuse vorgesehen, welches aus einem Grundkörper und einem Deckel besteht.

DE 20 2013 009 831 U1 zeigt ein Haustechnikgerät mit einem Flügelrad-Durchflussmesser und einer Verschlusseinheit an einem Deckel, der eine vereinfachte Montage des Durchflusssensors ermöglicht.

DE 2012 013 347 A1 zeigt einen Strömungssensor, der einen senkrecht zu einer Strömungsrichtung in einem Rohr drehbar aufgenommenen Sensorkörper aufweist. Der Sensorkörper ist drehbar an einer zwei elastische Tragarme aufweisenden Teilschale aufgenommen.

DE 103 25 722 C1 offenbart einen als Schaufelrad ausgebildeten Prüfsensor zur Überwachung von in Rohrleitungssystemen fließenden Löschmedien, der mittels einer Antriebseinheit in Drehbewegung versetzt wird.

Durchflusssensoren, insbesondere Flügelräder, sind über ihre Lebensdauer hohen Belastungen ausgesetzt. Üblicherweise werden die Flügelräder in dafür vorgesehenen Lagerschalen gelagert, die integral mit dem Flüssigkeitskanal, in dem der Durchflusssensor den Durchfluss bestimmt, ausgebildet sind.

Es ist bekannt, die Gehäuse der Durchflusseinheiten von Haustechnikgeräten, beispielsweise von Durchlauferhitzern, aus faserverstärkten, insbesondere glasfaserverstärkten, Kunststoffen zu fertigen, um die mit diesen Werkstoffen verbundenen Vorteile zu erlangen. Besonders bei schlechten Wasserqualitäten, das heißt insbesondere solche mit einem hohen Chloridanteil, kann es zu einem erhöhten Verschleiß und Abrieb der sich drehenden Flügelräder kommen, so dass die Lebenszeit des Haustechnikgerätes verkürzt ist.

Vor diesem Hintergrund war es eine Aufgabe der vorliegenden Erfindung, die Haltbarkeit von Durchflusssensoren von Haustechnikgeräten unabhängig von der Wasserqualität zu gewährleisten.

Die Aufgabe wird erfindungsgemäß durch eine Lagerkomponente eines Flügelrades eines Durchflusssensors mit den Merkmalen des Anspruchs 1 gelöst.

Demnach wird eine Lagerkomponente eines Durchflussensors, insbesondere eines Flügelrades, eines Haustechnikgerätes, insbesondere eines Durchlauferhitzers, vorgeschlagen, wobei der Durchflussensor eine Achse aufweist, die im Einbauzustand im Wesentlichen senkrecht zu einer Strömungsrichtung eines Fluidkanals des Haustechnikgerätes ist. Die Lagerkomponente ist einteilig ausgebildet und weist zwei miteinander verbundene Schenkel auf. Zwei gegenüberliegende Achsaufnahmen sind in der Lagerkomponente enthalten, wobei die beiden Achsaufnahmen derart voneinander beabstandet sind, dass sie in einem Zustand der Lagerkomponente einer Ausdehnung der Achse des Durchflusssensors entsprechen. Die beiden Schenkel sind elastisch ausgebildet sind, derart, dass zum Einsetzen des Durchflusssensors zwischen den Achsaufnahmen ein Abstand zwischen den Achsaufnahmen vergrößerbar ist.

Vorteilhaft sind für die beiden Enden der Achsen des Durchflusssensors an einem Schenkel die Achsaufnahme und gegenüberliegend an einem Schenkel die Achsaufnahme angebracht. Weiterhin entsprechen die Schenkel vorteilhaft in einem entspannten Zustand der Lagerkomponente einer Ausdehnung der Achse des Durchflusssensors.

Die erfindungsgemäße Lagerkomponente sorgt dafür, dass der Durchflusssensor, insbesondere das Flügelrad, nicht direkt in dem Gehäuse des Haustechnikgerätes, beispielsweise des Durchlaufbesitzers, gelagert ist. Das Gehäuse des Haustechnikgerätes weist regelmäßig Polyamid oder ähnliche Materialien auf, die faserverstärkt sind und demnach bei schlechten Wasserqualitäten, beispielsweise, ein schnelles Abschleifen des Durchflusssensors bedingen. Durch die schlechten Wasserqualitäten werden die Fasern aus dem Material herausgelöst, so dass ein hoher Abrieb des Durchflusssensors erfolgt. In dem die Lagerkomponente erfindungsgemäß zwischen Durchflusssensor und Gehäuse des Haustechnikgerätes angeordnet ist, ist der Durchflusssensor in der Lagerkomponente und nicht im Gehäuse des Haustechnikgerätes gelagert.

Die einteilige Ausgestaltung der Lagerkomponente ermöglicht es, eine Montage unaufwändig zu gestalten. Insbesondere kann dadurch, dass die Schenkel der Lagerkomponente elastisch ausgebildet sind, das Flügelrad zwischen den Schenkeln eingespannt werden, so dass ein Herausfallen des Durchflusssensors vermieden wird.

Erfindungsgemäß sind die beiden Schenkel an einem ersten Ende und an einem gegenüberliegenden zweiten Ende verbunden, wobei die Achsaufnahmen im Wesentlichen mittig zwischen dem ersten Ende und dem zweiten Ende ausgebildet sind, derart, dass der Abstand zwischen den Achsaufnahmen vergrößert wird, wenn eine komprimierende Kraft zwischen erstem Ende und zweitem Ende ausgeübt wird.

Die Lagerkomponente kann geschlossen, etwa in Form einer Raute, ausgebildet sein. In dieser bevorzugten Ausgestaltung sind die beiden Schenkel an einem ersten Ende und einem gegenüberliegenden zweiten Ende verbunden, d.h. beispielsweise in Form einer Raute ausgebildet.

Indem zwei gegenüberliegende Enden der Schenkel in diesem Fall aufeinander zu komprimiert werden, spreizen sich die Achsaufnahmen auseinander, so dass in dem Raum zwischen den Achsaufnahmen der beiden Schenkel hinreichend Platz für die Aufnahme des Durchflusssensors besteht. Indem die auf die Enden der Schenkel ausgeübte Kraft gelöst wird, kehren die Achsaufnahmen in ihre entspannte Position zurück, so dass der Durchflusssensor zwischen den Achsaufnahmen sicher aufgenommen ist. Gegenüber der offenen Ausgestaltung, d.h. eine Ausgestaltung, bei denen die Schenkel nur an einem ersten Ende miteinander verbunden sind und sich von dort in unterschiedlichen Richtungen hin zu den Achsaufnahmen erstrecken, ist die Montage des Durchflusssensors in der Lagerkomponente in dieser Ausgestaltung vereinfacht.

Gemäß der Erfindung ist die Lagerkomponente um die die Achsaufnahmen verbindende Achse symmetrisch ausgebildet. Dadurch wird eine Falschmontage, beispielsweise durch spiegelverkehrtes Einsetzen der Lagerkomponente, vermieden. Es sind nämlich dann beide Einsatzrichtungen auf gleiche Weise möglich.

Die Erfindung wird ferner durch eine Durchflussbaugruppe für ein Haustechnikgerät gelöst, die eine gemäß dem ersten Aspekt beschriebene Lagerkomponente und einen Durchflusssensor, insbesondere ein Flügelrad, mit einer Achse aufweist, wobei die Achse des Durchflusssensors zwischen Achsaufnahmen der Lagerkomponente aufgenommen ist.

Die erfindungsgemäße Durchflussbaugruppe kann demnach in einem einzigen Arbeitsschritt ebenso wie bisher bekannte Durchflusssensoren in das Gehäuse des Haustechnikgerätes eingesetzt werden. Indem die Lagerkomponente den Durchflusssensor sicher zwischen den Achsaufnahmen der Schenkel aufnimmt, ist ein Herausfallen des Durchflusssensors nicht möglich.

Vorzugsweise entspricht ein Werkstoff des Durchflusssensors dem Werkstoff der Lagerkomponente. Indem der Werkstoff des Lagers und des gelagerten Elementes gleich ist, ist eine zuverlässige und qualitativ hochwertige Lagerung möglich. Insbesondere sind die Gleiteigenschaften der Lagerung dauerhaft und nicht, wie beispielsweise bei einer direkten Lagerung an dem Gehäuse, mit einem schnellen Abschleifen verbunden.

Vorzugsweise weist wenigstens eine der Lagerkomponente und des Durchflusssensors ein Polyketon auf beziehungsweise besteht daraus. Polyketon hat sich als besonders widerstandsfähig gegen schlechte Wasserqualitäten, beispielsweise mit hohen Chloranteilen, herausgestellt. Auch andere Werkstoffe als Polyketone, beispielsweise POM, sind möglich.

Besonders bevorzugt weist weder die Lagerkomponente noch der Durchflusssensor Fasern zur Verstärkung des Materials auf, da diese den Abrieb erhöhen und die Lebensdauer verringern können.

Die Aufgabe wird erfindungsgemäß ferner durch ein Haustechnikgerät, insbesondere einen Durchlauferhitzer, gelöst. Das Haustechnikgerät weist ein Gehäuse, welches einen Grundkörper, einen Deckel und einen Kanal aufweist, auf. Das Haustechnikgerät umfasst ferner eine Durchflussbaugruppe gemäß der Erfindung. Der Grundkörper und/oder der Deckel weist einen Aufnahmeraum zur Aufnahme der Lagerkomponente auf, derart, dass der in der Lagerkomponente aufgenommene Durchflusssensor zumindest teilweise in den Kanal hineinragt, wenn die Lagerkomponente in dem Aufnahmeraum aufgenommen ist.

Durch den Aufnahmeraum wird die Position der Lagerkomponente relativ zu dem Kanal fixiert. Während die Lagerkomponente demnach eine feste Position hat, kann der Durchflusssensor, der in der Lagerkomponente gelagert ist, reibungsarm um die Achse drehen und den Durchfluss durch den Kanal bestimmen.

Das Fertigungskonzept der bisherigen Haustechnikgeräte ist nur minimal anzupassen, die Schritte des Einsetzens des Durchflusssensors in das Gehäuse und das Verschließen des Gehäuses mit dem Deckel bleiben gleich. Lediglich die einzusetzende Sensorkomponente wird geändert, nämlich derart, dass diese bereits eine Lagerung umfasst und nicht ausschließlich in dem Gehäuse gelagert ist.

Vorzugsweise ist der Deckel dazu ausgebildet, die in dem Aufnahmeraum aufgenommene Lagerkomponente zu fixieren.

Vorzugsweise weist das Gehäuse Polyamid auf beziehungsweise besteht daraus, insbesondere weist das Gehäuse vorzugsweise faserverstärktes Polyamid auf beziehungsweise besteht daraus. Polyamid und insbesondere faserverstärktes Polyamid ist haltbar, hitzebeständig und demnach besonders für Haustechnikgeräte, insbesondere Durchlauferhitzer, geeignet.

Vorteilhaft kann der Abstand der beiden gegenüberliegenden Achsaufnahmen für die beiden Enden der Achsen des Durchflussensors, vorteilhaft in einem entspannten Zustand der Lagerkomponente einer Ausdehnung der Achse des Durchflusssensors oder aber auch in einer gespannten Zustand der Lagerkomponente.

Vorteilhaft wird die Lagerkomponente in einem vorgespannten Zustand vorbereitet um die Achse aufzunehmen, wobei die Lagerkomponente dann nach dem Einbau der Achse in einem ungespannten Zustand in den Aufnahmeraum eingesetzt.

Alternativ bleibt die Lagerkomponente auch im eingebauten Zustand der Achse zumindest leicht gespannt und wird in einem gespannten Zustand in den Aufnahmeraum eingesetzt.

Im Aufnahmeraum eingesetzt verbleibt vorteilhaft der zumindest leicht vorgespannte Zustand der Lagerkomponente oder der vorgespannte Zustand wird vorteilhaft durch das Einsetzen in den Aufnahmeraum aufgehoben, wobei die Lagerkomponente insbesondere in den Aufnahmeraum einrastet.

In einer vorteilhaften Ausführung liegt die Lagerkomponente in einem gespannten oder ungespannten Zustand im Aufnahmeraum, wobei die Achse insbesondere axial weitgehend unbelastet in der Lagerkomponente verbleibt. Der Abstand der Achsaufnahmen ist zumindest größer/gleich der Länge der Achse, wodurch die Achse axial weitgehend spannungsfrei, vorteilhaft ohne einen axialen Andruck der Achsaufnahmen gelagert ist.

Weitere Vorteile und beispielhafte Ausgestaltungen werden nachfolgend mit Verweis auf die beigefügten Figuren beschrieben. Hierbei zeigen:
Figur 1 schematisch und exemplarisch einen Durchflusssensor,
Figur 2 schematisch und exemplarisch eine erfindungsgemäße Lagerkomponente,
Figur 3 schematisch und exemplarisch die erfindungsgemäße Lagerkomponente in ein Gehäuse eines Haustechnikgerätes eingesetzt.
Figur 4 Lagerkomponente mit beidseitig angeordneten Schenkeln
Figur 5 Draufsicht Lagerkomponente mit beidseitigen Schenkeln
Figur 6 Grundkörper mit Aufnahme für Lagerkomponente

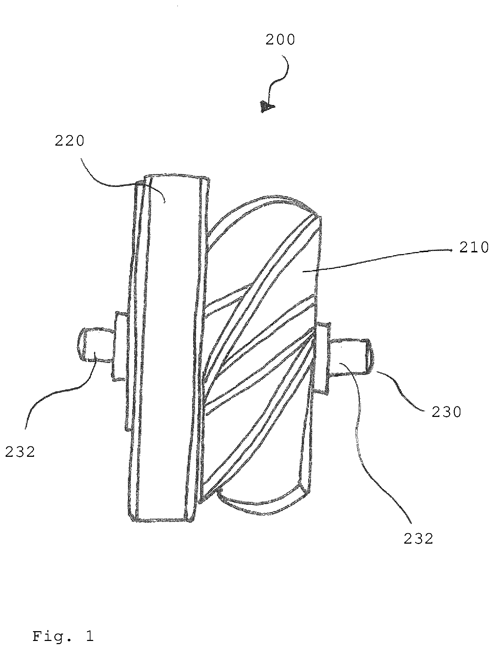

Figur 1 zeigt schematisch und exemplarisch einen Durchflusssensor 200 in beispielhafter Form eines Flügelrades, wie er bekanntermaßen zur Bestimmung des Durchflusses, beispielsweise bei einem Durchlauferhitzer, zum Einsatz kommt. Der Durchflusssensor 200 weist in diesem Beispiel die eigentlichen Flügelelemente 210 und ein Magnetelement 220 auf. Mittels der Flügelelemente 210 rotiert der Durchflusssensor 200 um eine Achse 230.

Auf beiden Seiten der Achse 230 weist der Durchflusssensor 200 Achszapfen 232 auf, die bisher direkt in dem Gehäuse eines Haustechnikgerätes gelagert waren.

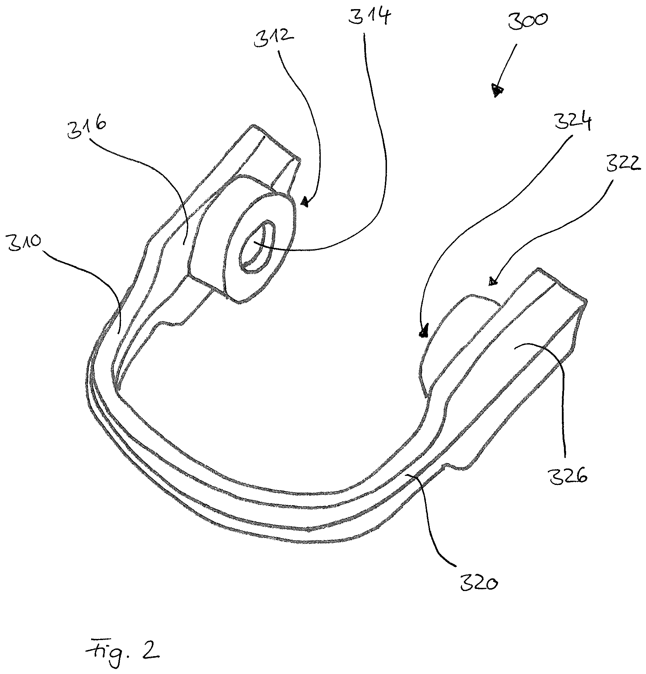

Fig. 2 zeigt schematisch und exemplarisch eine Lagerkomponente 300 zur Lagerung eines Durchflusssensors 200, wie er in Fig. 1 gezeigt ist. Die Lagerkomponente 300 weist zwei Schenkel 310 und 320 auf, an deren Ende sich jeweils eine Achsaufnahme 312, 322 befindet.

Die Achsaufnahme 312, 322 weist jeweils eine Aussparung 314, 324 auf, in die die jeweiligen Achszapfen 232 des Durchflusssensors 200 aufgenommen werden. Zum Montieren des Durchflusssensors 200 in der Lagerkomponente 300 werden die Schenkel 310,320 gespreizt, so dass der Abstand zwischen den Achsaufnahme 312 und 322 vergrößert ist. Dann kann der Durchflusssensor 200 zwischen den Achsaufnahmen 312, 322 eingesetzt werden. Nach dem Lösen kehrt die Lagerkomponente 300 wieder in ihre Ausgangsposition zurück, so dass der Durchflusssensor 200 sicher in der Lagerkomponente 300 aufgenommen ist.

Zur sicheren Fixierung innerhalb des Gehäuses des Haustechnikgerätes weist die Lagerkomponente 300 ferner in diesem Beispiel zwei optionale Fixierungskragen 316, 326 auf, die auf das Gehäuse abgestimmt sind und bei anderen Ausführungen des Gehäuses nicht oder anders ausgeführt werden können.

Die Lagerkomponente 300 ist in diesem Ausführungsbeispiel einstückig aus einem Polyketon hergestellt. Genauso ist der Durchflusssensor 200 aus einem Polyketon gefertigt. Indem das Material des Durchflusssensors 200 und der Lagerkomponente 300 gleich ist, sind dauerhafte Gleiteigenschaften der Achsaufnahme und des Durchflusssensors 200 gewährleistet. Insbesondere sind die Materialien vorzugsweise nicht faserverstärkt, damit ein Abrieb in chlorhaltigen Gewässern verringert wird.

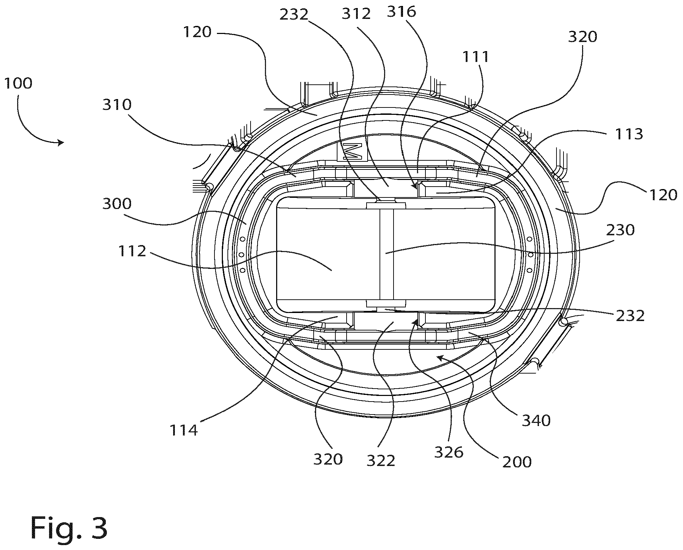

Fig. 3 zeigt schematisch und exemplarisch die aus Lagerkomponente 300 und Durchflusssensor 200 zusammengesetzte Durchflussbaugruppe in ein Haustechnikgerät 1 eingesetzt.

Das Haustechnikgerät 1 weist ein Gehäuse 100 mit einem Grundkörper 120 auf. Eine Öffnung 112 gibt den Weg in einen Fluidkanal frei, um darin die Durchflussbaugruppe einzufühlen. Die Öffnung 112 wird mit einem nicht gezeigten Deckel verschlossen. Von den Durchflusssensor 200 ist zur Verbesserung der Darstellbarkeit lediglich die Achse 230 gezeigt, die sich zwischen den Lageraufnahmen der Lagerkomponente 300 erstreckt.

Es kann gesehen werden, dass lediglich die Lagerkomponente 300, die nicht rotiert, in Kontakt mit dem Gehäuse 100 ist. Die Achse 230 ist hingegen ausschließlich in der Lagerkomponente 300 gelagert und demnach reibungsarm drehbar. In diesem Ausführungsbeispiel werden die Schenkel 310, 320 nach unten in die Zeichnungsebene hinein in die Öffnung 112 eingeführt. In anderen Ausführungen ist auch eine horizontale Auslegung der Lagerkomponente 300, d.h. in der Zeichnungsebene, möglich.

Die endgültige Position der Lagerkomponente 300 wird durch das Aufbringen des Deckels fixiert. Alternativ ist es auch möglich, die Durchflussbaugruppe in dem Deckel zu montieren, bevor dieser zum Verschluss der Öffnung 112 aufgesetzt wird.

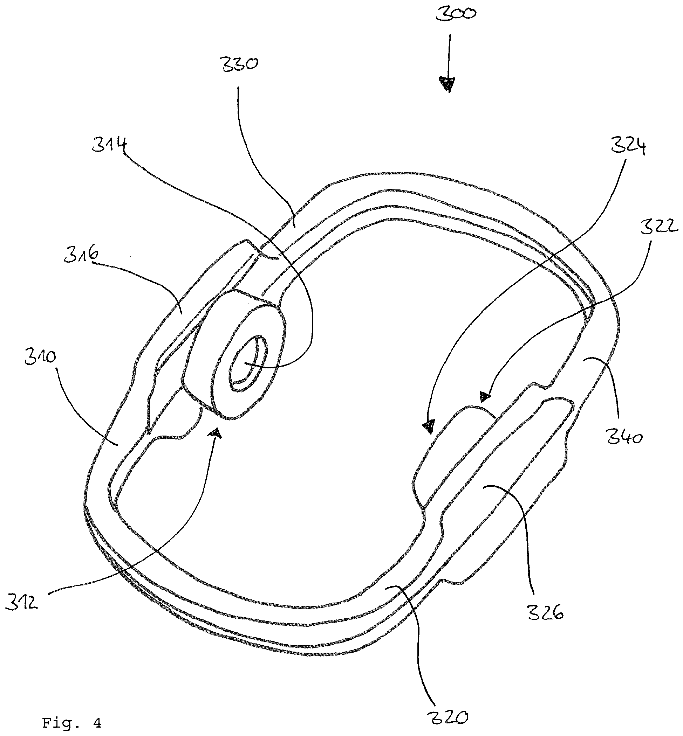

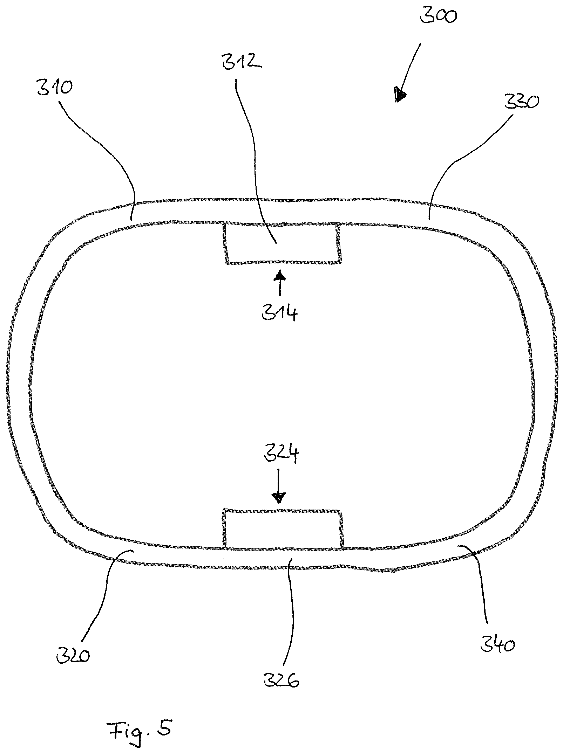

In Figur 4 und 5 ist eine Lagerkomponente 300 mit vier Schenkeln 310, 320, 330, 340 ausgeführt. Die Aussparungen 314, 324 sind zur Lagerung des Durchflusssensors 200 jeweils an zwei Schenkeln angebracht. Es ergibt sich eine Art geschlossener Ring aus verbundenen Schenkeln 310, 320, 330, 340, an denen die optionalen Fixierungskragen 316, 326 ausgeformt sind.

Die Schenkel 310, 320, 330, 340 sind elastisch oder flexibel ausgeführt, so dass der Durchflusssensor 200 in einem Montageverfahren insbesondere an den Aussparungen 314, 324 auseinander gedrückt werden kann, so dass der Durchflusssensor 200 dazwischen passt und in die Lagerkomponente 300 eingesteckt werden kann. Wenn der Durchflusssensor 200 in den Aussparungen 314, 324 eingesteckt ist, federn die Schenkel 310, 320, 330, 340 wieder zurück und der Durchflusssensor 200 ist drehbar in den Aussparungen 314, 324 gelagert. Danach kann die Lagerkomponente 300 mit dem eingebauten Durchflusssensor 200 in eine Aufnahme 111 des Grundkörpers 100 des Durchlauferhitzers eingelegt werden. Mit dem Deckel wird der Lagerkörper 300 im Grundkörper 100 gehalten und die Öffnung 112 wasserdicht verschlossen, so dass der Durchflusssensor 200 zumindest teilweise im Wasserkanal des Haustechnikgerätes, insbesondere Durchlauferhitzers montiert ist.

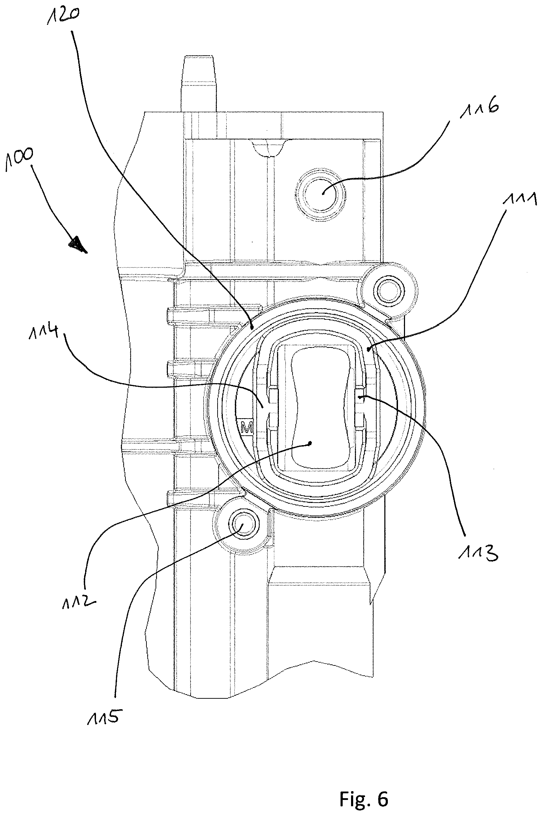

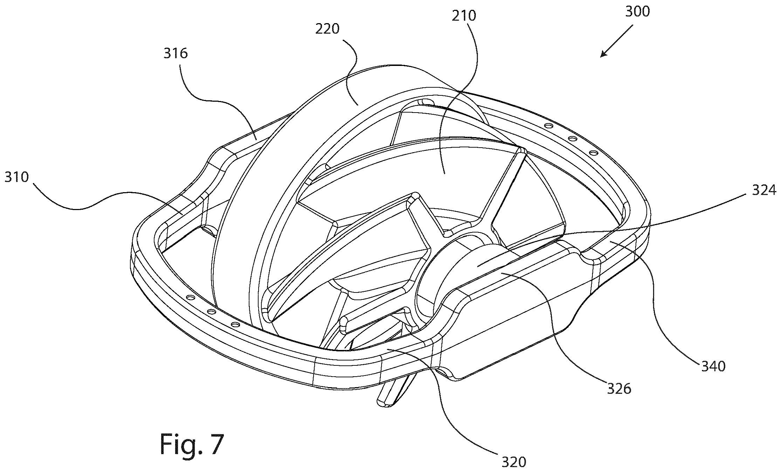

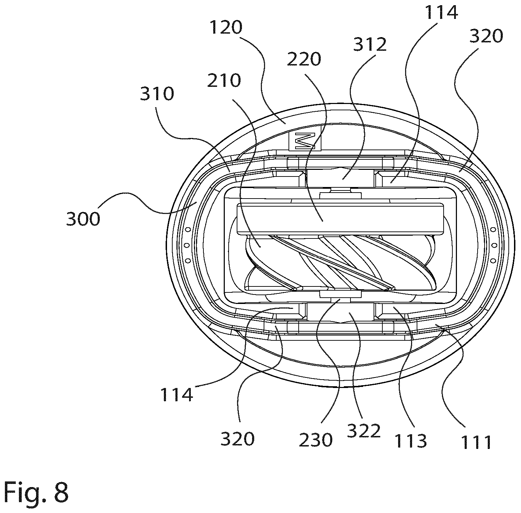

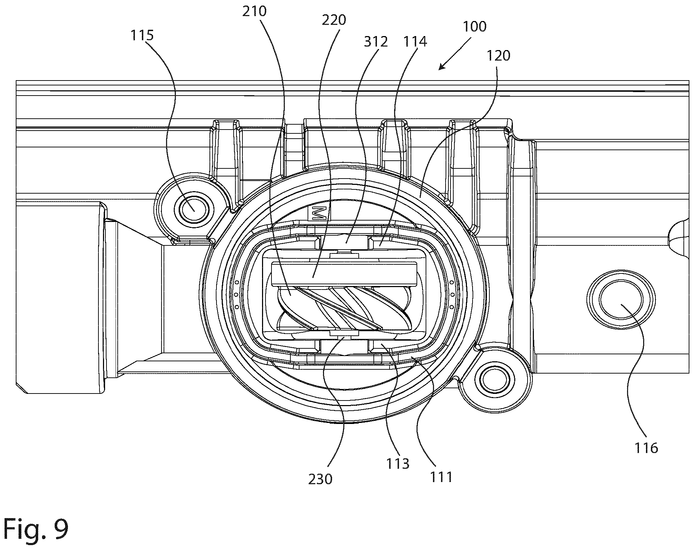

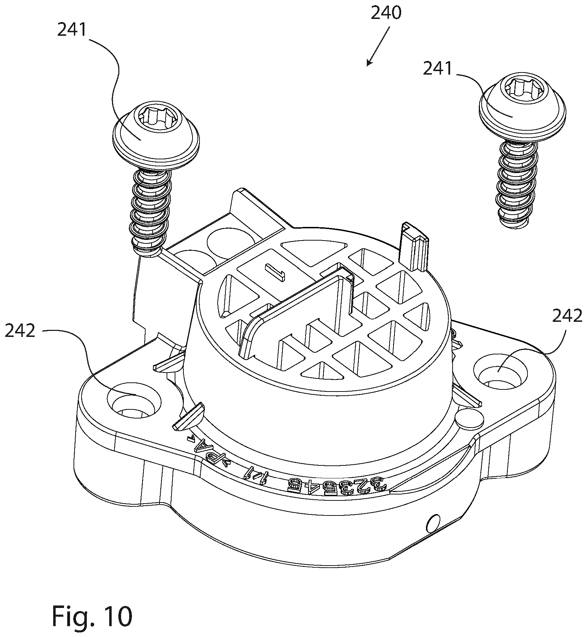

Eine Aufnahme 111 für die Lagerkomponente 300 ist in Figur 6 gezeigt. Eine Aufnahme 111 ist um die Öffnung 112 angeordnet und weist einen Raum 113, 114 für die Fixierungskragen 316, 326 auf. Befestigungsvorrichtungen 115, 116 dienen zu Befestigung des nicht dargestellten Deckels, der an dem Grundkörper 120 befestigt wird.

## Patentansprüche

1. Lagerkomponente (300) eines Durchflussensors (200), insbesondere eines Flügelrades, eines Haustechnikgerätes (1), insbesondere eines Durchlauferhitzers, wobei der Durchflussensor (200) eine Achse (230) aufweist, die im Einbauzustand im Wesentlichen senkrecht zu einer Strömungsrichtung eines Fluidkanals des Haustechnikgerätes (1) ist,
wobei die Lagerkomponente (300) einteilig ausgebildet ist und zumindest zwei miteinander verbundene Schenkel (310, 320) aufweist, wobei zwei gegenüberliegende Achsaufnahmen (312, 324) in der Lagerkomponente enthalten sind,
wobei die beiden Achsaufnahmen (312, 324) derart voneinander beabstandet sind, dass ihr Abstand in einem Zustand der Lagerkomponente (300) einer Ausdehnung der Achse (230) des Durchflusssensors (200) entspricht,
wobei die beiden Schenkel (310, 320) elastisch ausgebildet sind, derart, dass zum Einsetzen des Durchflusssensors (200) zwischen den Achsaufnahmen (312, 324) ein Abstand zwischen den Achsaufnahmen (312, 324) vergrößerbar ist,
**dadurch gekennzeichnet,**
**dass** die beiden Schenkel (310, 320) an einem ersten Ende und an einem gegenüberliegenden zweiten Ende verbunden sind, wobei die Achsaufnahmen (312, 324) im Wesentlichen mittig zwischen dem ersten Ende und dem zweiten Ende ausgebildet sind, derart, dass der Abstand zwischen den Achsaufnahmen (312, 324) vergrößert wird, wenn eine komprimierende Kraft zwischen erstem Ende und zweitem Ende ausgeübt wird, und/oder
**dass** die Lagerkomponente (300) um die die Achsaufnahmen (312, 324) verbindende Achse symmetrisch ausgebildet ist.

2. Lagerkomponente (300) nach Anspruch 1, wobei für die beiden Enden der Achsen (230) des Durchflusssensors (200) an einem ersten Schenkel (310) die erste Achsaufnahme (312) angebracht ist, gegenüberliegend an einem zweiten Schenkel (320) die zweite Achsaufnahme (324) angebracht ist, und der Abstand der Achsaufnahmen (312, 324) an den Schenkeln (320, 324) in einem entspannten Zustand der Lagerkomponente (300) einer Ausdehnung der Achse (230) des Durchflusssensors (200) entspricht.

3. Durchflussbaugruppe für ein Haustechnikgerät (1), umfassend eine Lagerkomponente (300) nach einem der vorstehenden Ansprüche und einen Durchflussensor (200), insbesondere ein Flügelrad, mit einer Achse, wobei die Achse des Durchflussensors (200) zwischen den Achsaufnahmen (312, 322) der Lagerkomponente (300) aufgenommen ist.

4. Durchflussbaugruppe nach Anspruch 3, wobei ein Werkstoff des Durchflussensors (200) und der Lagerkomponente (300) gleich ist.

5. Durchflussbaugruppe nach Anspruch 3 oder 4, wobei wenigstens eine der Lagerkomponente (300) und des Durchflussensors (200) ein Polyketon aufweist oder daraus besteht.

6. Haustechnikgerät (1), insbesondere Durchlauferhitzer, mit einem Gehäuse (100), welches einen Grundkörper (120), einen Deckel und einen Kanal aufweist,
und einer Durchflussbaugruppe nach einem der Ansprüche 3 bis 5,
wobei der Grundkörper (120) und/oder der Deckel einen Aufnahmeraum (112) zur Aufnahme der Lagerkomponente (300) aufweist, derart, dass der in der Lagerkomponente (300) aufgenommene Durchflussensor (200) zumindest teilweise in den Kanal hineinragt, wenn die Lagerkomponente (300) in dem Aufnahmeraum (112) aufgenommen ist.

7. Haustechnikgerät nach Anspruch 6, wobei der Deckel dazu ausgebildet ist, die in dem Aufnahmeraum (112) aufgenommene Lagerkomponente (300) zu fixieren.

8. Haustechnikgerät nach Anspruch 6 oder 7, wobei das Gehäuse (100) Polyamid aufweist bzw. daraus besteht, insbesondere faserverstärktes Polyamid aufweist bzw. daraus besteht.

## Claims

1. Bearing component (300) of a flow sensor (200), in particular of an impeller, of a building services appliance (1), in particular of an instantaneous water heater, wherein the flow sensor (200) has an axle (230) which in the installed state is substantially vertical to a direction of flow of a fluid channel of the building services appliance (1),
wherein the bearing component (300) is configured in one piece and comprises at least two legs (310, 320) connected to one another, wherein two opposing axle receptacles (312, 324) are contained in the bearing component,
wherein the two axle receptacles (312, 324) are spaced apart in such a way that their distance corresponds to an expansion of the axle (230) of the flow sensor (200) in a state of the bearing component (300),
wherein the two legs (310, 320) are configured to be elastic in such a way that, for the purpose of inserting the flow sensor (200) between the axle receptacles (312, 324), a distance between the axle receptacles (312, 324) can be increased,
**characterised in that**
the two legs (310, 320) are connected at a first end and at an opposite second end, wherein the axle receptacles (312, 324) are configured substantially centrally between the first end and the second end, such that the distance between the axle receptacles (312, 324) is increased when a compressive force is applied between the first end and the second end, and/or
that the bearing component (300) is configured to be symmetrical around the axle connecting the axle receptacles (312, 324).

2. Bearing component (300) according to claim 1, wherein the first axle receptacle (312) is attached to a first leg (310) for the two ends of the axles (230) of the flow sensor (200), the second axle receptacle (324) is attached opposite to a second leg (320), and the distance between the axle receptacles (312, 324) on the legs (320, 324) in a relaxed state of the bearing component (300) corresponds to an expansion of the axle (230) of the flow sensor (200).

3. Flow assembly for a building services appliance (1), comprising a bearing component (300) according to any one of the preceding claims and a flow sensor (200), in particular an impeller, having an axle, wherein the axle of the flow sensor (200) is accommodated between the axle receptacles (312, 322) of the bearing component (300).

4. Flow assembly according to claim 3, wherein a material of the flow sensor (200) and the bearing component (300) is the same.

5. Flow assembly according to claim 3 or 4, wherein at least one bearing component (300) and flow sensor (200) comprises or consists of a polyketone.

6. Building services appliance (1), in particular an instantaneous water heater, having a casing (100) which has a base body (120), a cover and a channel,
and a flow assembly according to any one of claims 3 to 5,
wherein the base body (120) and/or the cover has an accommodating space (112) for accommodating the bearing component (300), such that the flow sensor (200) accommodated in the bearing component (300) projects at least partially into the channel when the bearing component (300) is accommodated in the accommodating space (112).

7. Building services appliance according to claim 6, wherein the cover is configured to fix the bearing component (300) accommodated in the accommodating space (112).

8. Building services appliance according to claim 6 or 7, wherein the casing (100) comprises or consists of polyamide, in particular fibre-reinforced polyamide.

## Revendications

1. Composant de palier (300) d'un capteur de débit (200), en particulier d'une roue à ailettes, d'un appareil domestique (1), en particulier d'un chauffe-eau instantané, dans lequel le capteur de débit (200) présente un axe (230) qui, à l'état monté, est essentiellement perpendiculaire à un sens d'écoulement d'un canal de fluide de l'appareil domestique (1),
dans lequel le composant de palier (300) est réalisé d'une seule pièce et présente au moins deux branches (310, 320) reliées entre elles, dans lequel deux logements d'axe (312, 324) opposés sont contenus dans le composant de palier,
dans lequel les deux logements d'axe (312, 324) sont espacés l'un de l'autre de telle sorte que leur distance dans un état du composant de palier (300) correspond à une extension de l'axe (230) du capteur de débit (200),
dans lequel les deux branches (310, 320) sont réalisées de manière élastique, de telle sorte que pour insérer le capteur de débit (200) entre les logements d'axe (312, 324), une distance entre les logements d'axe (312, 324) peut être augmentée,
**caractérisé en ce que**
les deux branches (310, 320) sont reliées à une première extrémité et à une deuxième extrémité opposée, dans lequel les logements d'axe (312, 324) sont réalisés sensiblement au centre entre la première extrémité et la deuxième extrémité, de telle sorte que la distance entre les logements d'axe (312, 324) est augmentée lorsqu'une force de compression est exercée entre la première extrémité et la deuxième extrémité,
et/ou
le composant de palier (300) est réalisé de manière symétrique autour de l'axe reliant les logements d'axe (312, 324).

2. Composant de palier (300) selon la revendication 1, dans lequel, pour les deux extrémités des axes (230) du capteur de débit (200), le premier logement d'axe (312) est monté sur une première branche (310), le deuxième logement d'axe (324) est monté à l'opposé sur une deuxième branche (320), et la distance des logements d'axe (312, 324) sur les branches (320, 324) correspond, lorsque le composant de palier (300) est détendu, à une extension de l'axe (230) du capteur de débit (200).

3. Ensemble d'écoulement pour un appareil domestique (1), comprenant un composant de palier (300) selon l'une des revendications précédentes et un capteur de débit (200), en particulier une roue à ailettes, avec un axe, dans lequel l'axe du capteur de débit (200) est reçu entre les logements d'axe (312, 322) du composant de palier (300).

4. Ensemble d'écoulement selon la revendication 3, dans lequel un matériau du capteur de débit (200) et du composant de palier (300) est le même.

5. Ensemble d'écoulement selon les revendications 3 et 4, dans lequel au moins un des composants de palier (300) et du capteur de débit (200) comprend une polycétone ou en est constitué.

6. Appareil domestique (1), en particulier chauffe-eau instantané, avec un boîtier (100) qui présente un corps de base (120), un couvercle et un canal,
et un ensemble d'écoulement selon l'une des revendications 3 à 5,
dans lequel le corps de base (120) et/ou le couvercle présente un espace de réception (112) pour recevoir le composant de palier (300), de telle sorte que le capteur de débit (200) reçu dans le composant de palier (300) pénètre au moins partiellement dans le canal lorsque le composant de palier (300) est reçu dans l'espace de réception (112).

7. Appareil domestique selon la revendication 6, dans lequel le couvercle est conçu pour fixer le composant de palier (300) reçu dans l'espace de réception (112).

8. Appareil domestique selon la revendication 6 ou 7, dans lequel le boîtier (100) présente du polyamide ou en est constitué, en particulier du polyamide renforcé par des fibres ou en est constitué.
